# EUROPÄISCHE PATENTANMELDUNG

(11) **EP 3 954 527 A1**
(43) Veröffentlichungstag der Anmeldung: **16.02.2022**
(21) Anmeldenummer: 21190251.5
(22) Anmeldetag: 09.08.2021
(51) Int. Cl.: B29C 48/31, B29C 48/08, B29C 48/92, B29C 48/88

(54) **VERFAHREN ZUR HERSTELLUNG EINER KUNSTSTOFF-FOLIE**

(30) Priorität: 13.08.2020 DE 102020121364
(71) Anmelder: SML Maschinengesellschaft m.b.H., 4846 Redlham (AT)
(72) Erfinder: Rauscher, Thomas, 4880 Berg im Attergau (AT)
(74) Vertreter: Gosdin, Carstensen & Partner Patentanwälte Partnerschaftgesellschaft mbB

(57) **Zusammenfassung**

Die Erfindung betrifft ein Verfahren zur Herstellung einer Kunststoff-Folie (1), wobei eine Flachdüse (2) eine Anzahl Düsenbolzen (3) aufweist, mit denen die Größe des Austragspalts (4) von Kunststoffmaterials beeinflusst werden kann, wobei in Förderrichtung (F) hinter der Flachdüse (2) eine Messeinrichtung (5) für die Messung einer Eigenschaft der hergestellten Kunststoff-Folie (1) angeordnet ist. Um die Dicke der Kunststoff-Folie möglichst genau regeln zu können und dies schnell und automatisch bewerkstelligen zu können, sieht die Erfindung vor, dass zur Zuordnung der Position der Düsenbolzen (3) über der Breite (B) der Kunststoff-Folie (1) am Ort der Messeinrichtung (5) folgende Schritte durchgeführt werden: a) in Förderrichtung (F) hinter mindestens einem Düsenbolzen (3): Beaufschlagung der Kunststoff-Folie (1) mit einem Beaufschlagungselement (8); b) Messung einer Eigenschaft der Kunststoff-Folie (1) über die Breite (B) der Kunststoff-Folie (1) mittels der Messeinrichtung (5); c) Auswertung des Verlaufs der gemäß Schritt b) gemessenen Eigenschaft und Zuordnung der Positionen (I, II, III, ...) der Düsenbolzen (3) am Ort der Messeinrichtung (5); d) Speichern der ermittelten zugeordneten Positionen (I, II, III, ...) für den Fertigungsprozess, wobei die Beaufschlagung mit dem Beaufschlagungselement (8) gemäß Schritt a) an einer oder an mehreren solcher Stellen über der Breite (B) der Kunststoff-Folie durchgeführt wird, an der nach der Fertigung der Kunststoff-Folie (1) ein Schnitt durchgeführt wird.

## Beschreibung

Die Erfindung betrifft ein Verfahren zur Herstellung einer Kunststoff-Folie, bei dem schmelzflüssiges Kunststoffmaterial aus einer Flachdüse in eine Förderrichtung ausgebracht wird und nachfolgend abkühlt, wobei die Flachdüse in Breitenrichtung der Kunststoff-Folie nebeneinander eine Anzahl Düsenbolzen aufweist, mit denen die Größe des Austragspalts des schmelzflüssigen Kunststoffmaterials beeinflusst werden kann, wobei in Förderrichtung hinter der Flachdüse eine Messeinrichtung für die Messung einer Eigenschaft der hergestellten Kunststoff-Folie angeordnet ist, wobei zur Zuordnung der Position der Düsenbolzen über der Breite der Kunststoff-Folie am Ort der Messeinrichtung folgende Schritte durchgeführt werden:
a) in Förderrichtung hinter mindestens einem Düsenbolzen: Beaufschlagung der Kunststoff-Folie mit mindestens einem Beaufschlagungselement, so dass durch das Beaufschlagungselement eine Eigenschaft der Kunststoff-Folie verändert wird;
b) Messung einer Eigenschaft der Kunststoff-Folie über die Breite der Kunststoff-Folie mittels der Messeinrichtung;
c) Auswertung des Verlaufs der gemäß Schritt b) gemessenen Eigenschaft der Kunststoff-Folie über der Breite der Kunststoff-Folie und Zuordnung der Positionen der Düsenbolzen am Ort der Messeinrichtung aufgrund der aufgegebenen Beaufschlagung;
d) Speichern der ermittelten zugeordneten Positionen für den laufenden und/oder den sich anschließenden Fertigungsprozess.

Ein Verfahren der gattungsgemäßen Art ist aus der JP S61 35 225 A bekannt. Ähnliche und andere Lösungen zeigen die JP 2010 - 167 584 A**,** die JP H08 332 665 A und die EP 2 837 484 A1**.**

Bei der Herstellung von hochwertigen Kunststoff-Folien wird schmelzflüssiges Kunststoffmaterial aus einem Extruder über eine Flachdüse ausgebracht. Dabei ist es wesentlich, dass die Dicke des ausgebrachten Kunststoffs über der Breite des Materials auf einem vorgegebenen Wert gehalten wird. Um dies zu gewährleisten, weist die Flachdüse eine Anzahl in Breitenrichtung nebeneinander angeordnete Düsenbolzen auf, die es ermöglichen, die Größe des Austrittsspalts für das schmelzflüssige Material aus der Flachdüse einzustellen. Eine solche Flachdüse (auch als Breitschlitzdüse bezeichnet) ist in der DE 35 03 721 C2 beschrieben, auf die insoweit ausdrücklich Bezug genommen wird.

Ist das schmelzflüssige Material aus dem Austragspalt der Flachdüse ausgebracht, kühlt es ab, wozu zumeist eine Kühlwalze eingesetzt wird. Zur präzisen Regelung der Dicke der Kunststoff-Folie über deren Breite wird an einer dem Austrittsspalt nachgeordneten Stelle die Dicke der Folie gemessen, wofür eine entsprechende und an sich bekannte Messvorrichtung zum Einsatz kommt. Abhängig vom Messergebnis kann dann auf den entsprechenden Düsenbolzen ein Signal ausgegeben werden, so dass die Dicke der Folie dem vorgegebenen Wert entspricht (dies findet bevorzugt im geschlossenen Regelkreis statt).

Ein Problem ergibt sich hierbei durch das sogenannte "Neck-In": Bei der Flachfolienextrusion kommt es beim Abkühlen der Schmelze auf dem Weg zur Kühlwalze infolge Materialkontraktion zum Einschnüren der Schmelzefahne in Breitenrichtung der Folie. Folglich verändern (verschieben) sich diejenigen Positionen auf der Folie (insbesondere in deren Randbereich), die der Lage des Düsenbolzens entspricht.

Bei der Flachfolienextrusion ist es daher üblich, dass man ein "Mapping" durchführt, um die Zuordnung zwischen dem Düsenbolzen bzw. der Position der Folie beim Austritt aus der Extrusionsdüse auf der einen Seite und der korrespondierenden Position der Folie am Ort der Dickenmessung auf der anderen Seite vorzunehmen; dies ist, wie gesagt, durch das "Neck-In", d. h. durch das Einschnüren der Folie in Folge Schrumpfung am Rand der Folie erforderlich. Nur durch eine präzise Zuordnung der genannten Art kann eine genaue Regelung der Dicke der Folie gewährleisten werden.

Um die Zuordnung zwischen der Lage des Düsenbolzens und der korrespondierenden Position auf der Folie am Ort der Messeinrichtung zu finden, wird bislang so vorgegangen, dass ein Maschinenführer die Folie an der Austrittsstelle der Flachdüse am Ort des Düsenbolzens mit einer Ölkreide markiert und dann die Messung der Dicke auf die Lage des erzeugten Kreide-Strichs am Ort des Messeinrichtung eingestellt wird. Die Positionen werden gespeichert und so die gewünschte bzw. benötigte Zuordnung hergestellt. Das "Mapping" erfolgt also bislang manuell durch den Operator der Anlage.

Eine solche Zuordnung ist insbesondere immer nötig, wenn sich die Anlagengeschwindigkeit, die Rezeptur, die Foliendicke, die Abkühlgeschwindigkeit, die Vakuumbox und/oder die Folienbreite ändern.

Da die genannte Zuordnung eine gewisse Zeit erfordert und im übrigen auch zu Abfall bzw. Ausschuss führt, ist der erforderliche Prozess relativ kostenintensiv.

Der Erfindung liegt daher die **Aufgabe** zugrunde, ein Verfahren der eingangs genannten Art bereitzustellen, mit dem es möglich ist, die Dicke der Kunststoff-Folie möglichst genau zu regeln, wobei dies schnell und automatisch bewerkstelligt werden soll. Insbesondere soll in schneller und kostengünstiger Weise eine Zuordnung der Lage der Düsenbolzen zur Position derselben auf der Folie am Ort der Messeinrichtung möglich werden. Dabei soll es vermieden werden, zwecks Durchführung der genannten Messung die Düsenbolzen zu beeinflussen.

Die **Lösung** dieser Aufgabe durch die Erfindung ist dadurch gekennzeichnet, dass die Beaufschlagung mit dem Beaufschlagungselement gemäß obigem Schritt a) an einer oder an mehreren solcher Stellen über der Breite der Kunststoff-Folie, vorzugsweise nur an diesen Stellen, durchgeführt wird, an der nach (bzw. bei) der Fertigung der Kunststoff-Folie ein Schnitt, insbesondere ein Randbeschnitt, ein Mittelschnitt oder ein Teilnutzenschnitt, durchgeführt wird.

Damit hat die Veränderung einer Eigenschaft der Folie im Weiteren keine Bedeutung, da hier ohnehin ein Schneiden der Folie erfolgt. An diesen Stellen wirkt sich eine geringfügige Veränderung einer Eigenschaft der Folie in Folge des vorgeschlagenen Verfahrens kaum aus bzw. hat sogar noch Vorteile, da manchmal im Bereich der Schnittkanten eine geringfügig größere Dicke der Folie vorteilhaft ist.

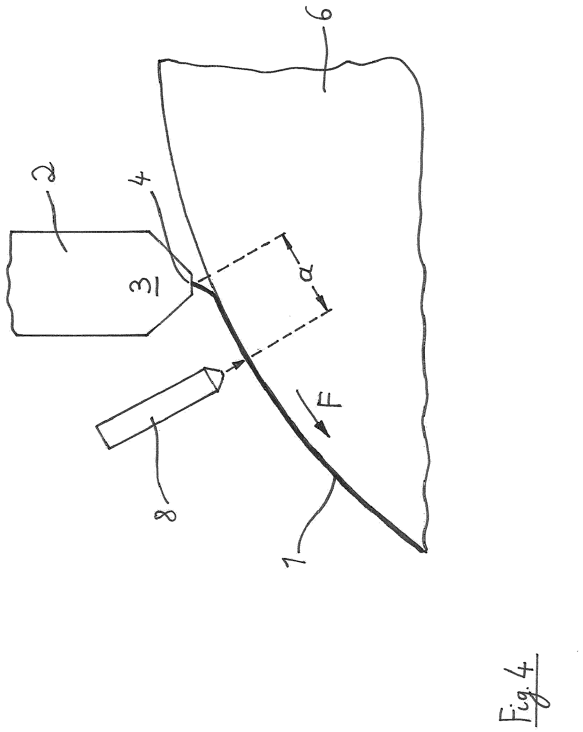

Die Beaufschlagung mit dem Beaufschlagungselement gemäß obigem Schritt a) erfolgt dabei bevorzugt in unmittelbarer Nähe des Düsenbolzens. Dabei ist insbesondere vorgesehen, dass die Beaufschlagung mit dem Beaufschlagungselement in einem Abstand zwischen 5 mm und 100 mm, vorzugsweise zwischen 10 mm und 30 mm, erfolgt. Der Abstand ist dabei die Strecke zwischen dem Austritt des Austragspalts der Flachdüse und der (Wirk-)Mitte des Beaufschlagelements in Förderrichtung (s. Figur 4 unten), entsprechend im wesentlichen dem Bogen auf der Kühlwalze, deren Durchmesser im Vergleich zum Abstand sehr groß ist. Ferner erfolgt die Beaufschlagung mit dem Beaufschlagungselement bevorzugt in Flucht mit der Position des Düsenbolzens, d. h. das Beaufschlagungselement liegt zwar in Förderrichtung versetzt, aber (bezogen auf die Breitenrichtung der Folie) an der Position des Düsenbolzens.

Die Beaufschlagung mit dem Beaufschlagungselement gemäß obigem Schritt
a) erfolgt dabei gemäß einer bevorzugten Ausführungsform der Erfindung so, dass ein Luftstrom mittels des Beaufschlagungselements auf die Oberfläche der Kunststoff-Folie ausgebracht wird.

Die genannte Beaufschlagung kann auch so erfolgen, dass ein lokales Vakuum mittels des Beaufschlagungselements an der Oberfläche der Kunststoff-Folie erzeugt wird.

Weiterhin kann die Beaufschlagung so erfolgen, dass eine Flüssigkeit, insbesondere Wasser oder Öl, mittels des Beaufschlagungselements auf die Oberfläche der Kunststoff-Folie aufgespritzt wird.

Schließlich sieht eine weitere Ausführungsform der Erfindung vor, dass die Beaufschlagung mit dem Beaufschlagungselement so erfolgt, dass eine Farbe mittels des Beaufschlagungselements auf die Oberfläche der Kunststoff-Folie aufgebracht wird.

In allen genannten Fällen wird eine Eigenschaft der Folie lokal verändert, was für die nachfolgende Messung genutzt wird.

Die Abfolge der obigen Schritte a) bis d) erfolgt vorzugsweise automatisiert. Es reicht dann aus, den Zuordnungsprozess über die Maschinensteuerung auszulösen; die Verfahrensschritte werden dann automatisch durchgeführt und die ermittelten Positionen der Düsenbolzen am Ort der Messeinrichtung ermittelt und abgespeichert.

Die Messeinrichtung kann die Eigenschaft der Kunststoff-Folie (und insbesondere deren Dicke) mittels einer Infrarotmessung, einer Röntgenmessung, einer Ultraschallmessung, einer optischen Messung oder einer Radioaktivitätsmessung ermitteln.

Die Auswertung des Verlaufs der Eigenschaft der Kunststoff-Folie über der Breite der Kunststoff-Folie gemäß obigem Schritt c) zur Identifikation der zugeordneten Position der Düsenbolzen kann eine Ermittlung der Maximal- oder Minimalwerte der Dicke der Kunststoff-Folie über deren Breite umfassen. Hiernach vermisst also die Messeinrichtung die Dicke der Folie über deren Breite. Die ermittelten Werte werden von einem Computer bzw. der Steuerung der Anlage erfasst und auf Maximalwerte (oder Minimalwerte) hin untersucht. Infolge der genannten Parameteränderung ergeben sich charakteristische Maxima bzw. Minima der Dicke der Folie über deren Breite, von denen auf die Lage der Düsenbolzen geschlossen werden kann.

Analog kann auch die Ermittlung der Maximal- oder Minimalwerte der Dichte der Kunststoff-Folie über deren Breite vorgesehen werden.

Eine weitere Ausführungsform der Erfindung sieht vor, dass die Auswertung des Verlaufs der Eigenschaft der Kunststoff-Folie über der Breite derselben zur Identifikation der zugeordneten Position der Düsenbolzen eine Ermittlung einer optischen Eigenschaft der Kunststoff-Folie, insbesondere des Reflexionsverhaltens der Kunststoff-Folie, über deren Breite umfasst.

Statt also, wie bislang, den Ort des Düsenbolzens bzw. der Düsenbolzen durch Ölkreide zu markieren und dann zu prüfen, wo infolge des "Neck-In" die zugehörige Position am Ort der Messeinrichtung zu liegen kommt, wird zumindest hinter einem Düsenbolzen eine Änderung der Eigenschaft der Folie erzeugt, die eine lokale Veränderung der Folie hervorruft; diese Veränderung wird dann durch die Messeinrichtung erfasst. Die Auswertung der gemessenen Daten erlaubt die Zuordnung des Orts des Düsenbolzens bzw. der Düsenbolzen.

Das Abkühlen der Kunststoff-Folie erfolgt zumeist, indem die Kunststoff-Folie um mindestens eine Kühlwalze geführt wird. Allerdings ist auch eine Abkühlung an Luft oder durch Wasser denkbar.

Das vorgeschlagene Verfahren wird vorzugsweise bei oder nach einem Produktionswechsel, d. h. nach einem Wechsel der herzustellenden Kunststoff-Folie, durchgeführt. Während der kontinuierlichen Produktion von Folie ist die erläuterte Zuordnung zumeist nicht erforderlich. Allerdings kann es auch sinnvoll sein, in zeitlichen Abständen (zum Beispiel alle 30 oder 60 Minuten) das erläuterte Verfahren für die neuerliche Zuordnung der Lage der Düsenbolzen am Ort der Messeinrichtung zu wiederholen, um den Produktionsvorgang zu optimieren. Insoweit kann dann also auch während der kontinuierlichen Produktion das vorgeschlagene Verfahren durchgeführt werden.

Mit dem vorgeschlagenen Verfahren ist es möglich, die erforderliche Zuordnung schnell und automatisch durchzuführen, so dass die dafür erforderlichen Kosten niedrig bleiben. Weiterhin kann Abfall bzw. Ausschuss auf ein Minimum reduziert werden.

Das vorgeschlagene Verfahren kann somit ohne relevante Störungen des Produktionsprozesses durchgeführt werden.

Betreffend die zu identifizierenden Positionen für die Zuordnung der Lage der Düsenbolzen können diese, wie oben erwähnt, vorteilhaft an den Schnittkanten (Randbeschnitt, Mittelschnitt, Teilnutzenschnitt) liegen, da die geringfügige Änderung der Dicke der Folie hier keine negativen Auswirkungen auf die Folie und Rollenqualität hat. Im Gegenteil kann dies an diesen Stellen vorteilhaft sein. Würde die Position indes in der Mitte oder in anderen Teilbereichen der Folie liegen, könnte dies einen negativen Einfluss auf die Wickelfähigkeit und Qualität des Produktes haben und zu Abfall bzw. Ausschuss führen.

Wird indes die Lage der Düsenbolzen, wie erwähnt, an den Schnittkanten vorgesehen, kann das vorgeschlagene Verfahren ohne relevante Störungen des Produktionsprozesses durchgeführt werden.

Liegt z. B. eine 3 m breite Folie vor, aus welcher 6 Rollen ä 500 mm geschnitten werden, kann das automatische Mapping an 7 Stellen durchgeführt werden, ohne den Produktionsprozess zu stören.

Liegt eine 3 m breite Folie vor, aus welcher 12 Rollen ä 250 mm geschnitten werden, kann das automatische Mapping an 13 Stellen durchgeführt werden, ohne den Produktionsprozess zu stören.

Somit liegt ein hohes Maß an Breitenflexibilität vor.

Durch die vorgeschlagene Vorgehensweise wird es möglich, das "Neck-In" präzise zu vermessen, ohne dass hierfür die Düsenbolzen beeinflusst werden müssen.

Hierzu wird, wie erläutert, mit den Beaufschlagungselementen gezielt eine Eigenschaft der Folie verändert, wobei insbesondere eine lokale Veränderung der Dicke oder der Dichte der Folie bewerkstelligt wird. Gleichermaßen kann das Reflexionsverhalten verändert werden, welche sich zur Identifikation der Lage der Düsenbolzen über die Breite der Folie gut eignet.

In der Zeichnung ist ein Ausführungsbeispiel der Erfindung dargestellt. Es zeigen:
- Fig. 1: schematisch in der Seitenansicht eine Vorrichtung zur Herstellung einer Kunststofffolie,
- Fig. 2: in der Seitenansicht einen Abschnitt eine Flachdüse mit der Darstellung eines Düsenbolzens,
- Fig. 3: schematisch die Hälfte einer Flachdüse und das aus dieser austretende Kunststoffmaterial in Blickrichtung "A" gemäß Figur 1, wobei das stattfindende "Neck-In" übertrieben dargestellt ist,
- Fig. 4: die Einzelheit X gemäß Figur 1, wobei das Zusammenwirken eines Düsenbolzens mit einem Beaufschlagungselement dargestellt ist, und
- Fig. 5: schematisch eine mit dem Beaufschlagungselement in einer Eigenschaft, hier in Form der Dicke, veränderte Folie im Querschnitt, wonach sich eine Änderung der Dicke der Kunststoff-Folie über deren Breite ergeben hat.

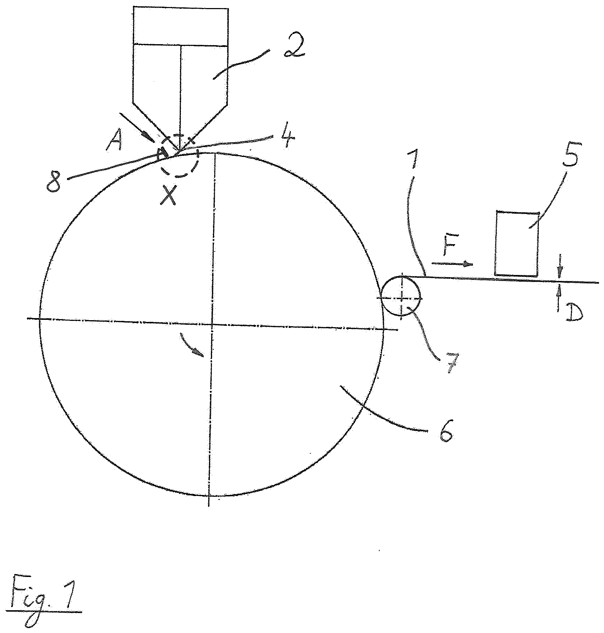

In Figur 1 ist eine Vorrichtung gezeigt, mit der eine Kunststoff-Folie 1, beispielsweise eine mehrschichtige Dehnfolie, produziert werden kann. Hierzu wird Kunststoffschmelze über den Austragspalt (Düsenaustritt) 4 einer Flachdüse 2 ausgebracht, so dass eine Folie mit gewisser Breite B vorliegt. Vom Austragspalt 4 der Flachdüse 2 wird das Kunststoff-Material auf eine Kühlwalze 6 aufgebracht, von der aus die abgekühlte Folie über eine Abhebewalze 7 von der Kühlwalze 6 abgenommen und (in Förderrichtung F) weitergefördert wird.

Damit zwischen Folie 1 und Kühlwalze 6 bei der erläuterten Führung der Folie 1 um die Kühlwalze 6 herum keine Luft gelangt, sind nicht dargestellte Mittel zur Erzeugung eines Unterdrucks (Vakuumbox) vorgesehen.

Damit die Folie über ihrer Breite in einem möglichst engen Toleranzbereich eine definierte Dicke D aufweist, wird die Größe des Austragspalts 4 geregelt. Erfasst wird die tatsächliche Dicke D der Kunststoff-Folie 1 über eine Messeinrichtung 5, die in Förderrichtung F hinter der Abhebewalze 7 angeordnet ist. Derartige Messeinrichtungen 5 sind bekannt und arbeiten beispielsweise der Basis einer Infrarotmessung. Mit einer solchen Einrichtung kann die Dicke D über der Breite der Folie 1 präzise ermittelt werden.

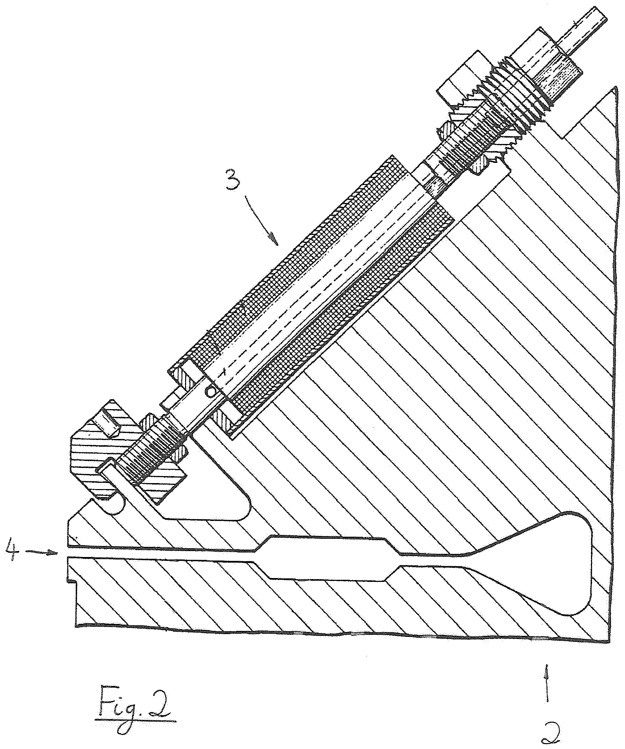

Um vorzugsweise im geschlossenen Regelkreis gezielt Einfluss auf die Dicke D der Folie 1 zu nehmen, weist die Flachdüse 2 Mittel auf, mit denen die Größe des Austragspalts 4 gezielt verändert werden kann. Dies wird durch Düsenbolzen 3 bewerkstelligt, von denen eine Anzahl über die Breite der Flachdüse 2 angeordnet sind. In Figur 2 ist einer dieser Düsenbolzen 3 dargestellt. Zur diesbezüglichen Technologie wird auf die oben bereits erwähnte DE 35 03 721 C2 ausdrücklich Bezug genommen.

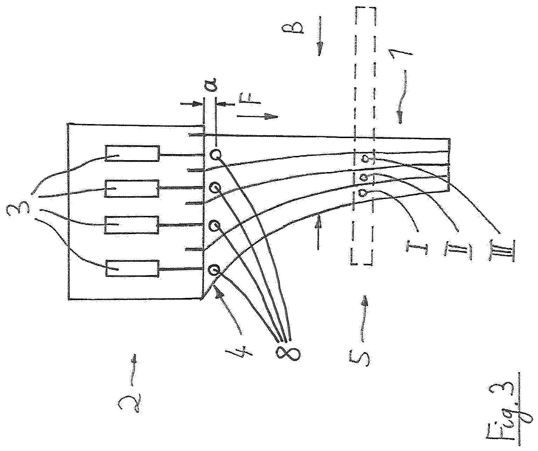

Die der vorliegenden Erfindung zu Grunde liegende Problematik ist in Figur 3 in übertriebener Darstellung illustriert, nämlich der sogenannte "Neck-In" der Folie, der sich infolge der Kontraktion bei der Abkühlung derselben ergibt.

In Figur 3 ist schematisch die (eine Hälfte einer) Flachdüse 2 dargestellt, wobei mehrere Düsenbolzen 3 angedeutet sind, mit denen lokal die Größe des Austragspalts 4 verändert werden kann. Das schmelzflüssige Kunststoffmaterial verlässt die Flachdüse 2 in Förderrichtung F und kühlt ab. Infolge der Schrumpfung des Materials zieht sich die erzeugte Kunststoff-Folie 1 zusammen und schnürt sich, wie übertrieben dargestellt, in ihrer Breite B ein. Die Messeinrichtung 5 ermittelt die Dicke der Kunststoff-Folie 1 über deren Breite B.

Wie sich aus Figur 3 somit sofort ergibt, ist es zur präzisen Regelung der Dicke der Folie 1 erforderlich, dass eine Zuordnung des Austrags des jeweiligen Düsenbolzens 3 zur Position I, II, III am Ort der Messeinrichtung 5 erfolgt. Nur so nämlich kann gezielt über den Düsenbolzen 3 der Austragspalt 4 so geregelt werden, dass am Ort der Messeinrichtung 5 eine gewünschte Dicke D der Folie 1 vorliegt.

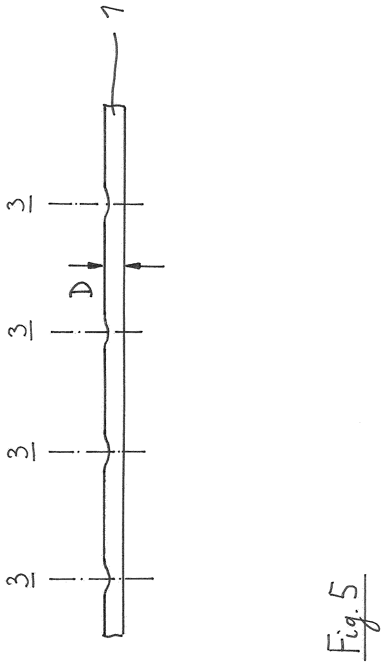

Wie erfindungsgemäß hierzu vorgegangen wird, ist für ein Ausführungsbeispiel in Figur 4 und Figur 5 illustriert:
Im Falle dieses Ausführungsbeispiel befindet sich, wie in Figur 4 (und auch in Figur 1) dargestellt, hinter einer Anzahl von Düsenbolzen 3 (insbesondere hinter jedem Düsenbolzen 3), und zwar in einem Abstand a in Förderrichtung F, der typischerweise zwischen 10 mm und 30 mm beträgt, ein Beaufschlagungselement 8. In Förderrichtung F fluchtet der Ort des Düsenbolzens 3 und der Ort des Beaufschlagungselements 8.

Im Falle des Ausführungsbeispiels ist das Beaufschlagungselement 8 so ausgestaltet, dass ein dünner Luftstrahl auf die Oberfläche der Folie 1 geblasen werden kann. Dies hat zur Folge, dass sich lokal eine Eigenschaft der Folie, im vorliegenden Falle nämlich die Dicke D, geringfügig vermindert, da der Luftstrahl das noch weiche Kunststoffmaterial verdrängt.

Mittels der Messeinrichtung 5 wird die Dicke D der hergestellten Folie vermessen, so dass sich schematisch ein Verlauf ergibt, wie er in Figur 5 dargestellt ist. Am Ort des Düsenbolzens 3, entsprechend dem Ort des Beaufschlagungselements 8, hat sich die Dicke D geringfügig verändert, was über die Messeinrichtung 5 erfasst wird.

Die automatische und computergesteuerte Auswertung des in Figur 5 dargestellten Verlaufs der Dicke D über der Breite B der Folie erlaubt die Zuordnung der Positionen I, II, III, ... der Düsenbolzen 3 am Ort der Messeinrichtung 5.

Die von den Beaufschlagungselementen 8 hervorgerufene Dickenveränderung pflanzt sich also in Förderrichtung F fort, bis die Folie den Ort der Messeinrichtung 5 erreicht hat. Durch Dickenmessung kann das Dickenprofil der Folie 1 genau bestimmt werden und folglich auch durch softwaretechnische Analyse bzw. Auswertung die Lage der Maxima (bzw. Minima) der Dicke (d. h. die Lage der "Einbuchtungen", wie sie sich aus Figur 5 ergeben). Hierzu wird in an sich bekannter Weise eine Auswertung der Messwerte vorgenommen und die Maximalwerte bestimmt, aufgrund derer sich auf die Lage der Düsenbolzen 3 schließen lässt.

Anders ausgedrückt kann man auch sagen, dass ausgehend von einer mittleren Dicke der Folie die Abweichungen (Delta) zur mittleren Dicke ermittelt werden. Die Lage dieser "Deltas" geben Auskunft darüber, wo die gesuchten Positionen liegen.

Die so ermittelten Positionen, die der Lage der Düsenbolzen zugeordnet werden können, werden gespeichert und für den anstehenden Produktionsprozess verwendet. Die Regelung der präzisen Dicke der Folie wird so in einfacher Weise sichergestellt. Die oben erläuterte bislang übliche Vorgehensweise, die vom Operator der Anlage zeitaufwendig und mitunter mit hohem Ausschuss vorgenommen werden kann, wird entbehrlich.

Im erläuterten Ausführungsbeispiel wird, wie beschrieben, mittels des Beaufschlagungselements 8 ein Luftstrahl auf die Oberfläche der noch weichen Folie aufgebracht, um deren Dicke an dieser Stelle zu beeinflussen.

Allerdings sind hierfür auch Alternativen möglich, die auf der Änderung anderer Eigenschaften der Folie basieren.

So kann durch Aufbringung von Luft oder durch Anlegen eines lokal begrenzten Vakuums mittels des Beaufschlagungselements 8 nicht nur die Dicke, sondern auch die Dichte der Folie verändert werden. In der Messeinrichtung 5 werden dann auch Messmittel integriert, die den Verlauf der Dichte über der Breite der Folie 1 ermitteln können. Die Auswertung des Verlaufs (wie in Figur 5) erfolgt analog.

Eine weitere Möglichkeit besteht darin, dass durch die Beaufschlagungselemente 8 Wasser, Öl oder eine Farbe auf die Oberfläche der Folie aufgebracht wird. Auch hierdurch verändern sich lokal spezielle Eigenschaften der Folie, die für die beschriebene Messung herangezogen werden können.

Wird beispielsweise eine der beschriebenen Flüssigkeiten auf die Folie aufgebracht, ändern sich unter anderem die Reflexionseigenschaften der Folie. Sind dann in der Messeinrichtung 5 neben den Messelementen für die Erfassung der Dicke der Folie auch solche für die Erfassung des Reflexionsverhaltens (IR-Sensoren) vorhanden, kann in analoger Weise wiederum am Ort der Messeinrichtung 5 auf die genaue Lage der Düsenbolzen 3 geschlossen werden.

Insofern können in der Messeinrichtung 5 neben Messelementen für die Ermittlung der Dicke der Folie auch solche für die Erfassung anderer Eigenschaften der Folie integriert sein. Beispiele für die verschiedenen Arten von Sensoren sind oben angegeben.

### Bezugszeichenliste:

- 1: Kunststoff-Folie
- 2: Flachdüse
- 3: Düsenbolzen
- 4: Austragspalt
- 5: Messeinrichtung
- 6: Kühlwalze
- 7: Abhebewalze
- 8: Beaufschlagungselement

- I: Position des Düsenbolzens am Ort der Messeinrichtung
- II: Position des Düsenbolzens am Ort der Messeinrichtung
- III: Position des Düsenbolzens am Ort der Messeinrichtung

- F: Förderrichtung
- D: Dicke der Kunststoff-Folie
- B: Breite der Kunststoff-Folie
- a: Abstand

## Patentansprüche

1. Verfahren zur Herstellung einer Kunststoff-Folie (1), bei dem schmelzflüssiges Kunststoffmaterial aus einer Flachdüse (2) in eine Förderrichtung (F) ausgebracht wird und nachfolgend abkühlt, wobei die Flachdüse (2) in Breitenrichtung der Kunststoff-Folie (1) nebeneinander eine Anzahl Düsenbolzen (3) aufweist, mit denen die Größe des Austragspalts (4) des schmelzflüssigen Kunststoffmaterials beeinflusst werden kann, wobei in Förderrichtung (F) hinter der Flachdüse (2) eine Messeinrichtung (5) für die Messung einer Eigenschaft der hergestellten Kunststoff-Folie (1) angeordnet ist, wobei zur Zuordnung der Position der Düsenbolzen (3) über der Breite (B) der Kunststoff-Folie (1) am Ort der Messeinrichtung (5) folgende Schritte durchgeführt werden:
a) in Förderrichtung (F) hinter mindestens einem Düsenbolzen (3): Beaufschlagung der Kunststoff-Folie (1) mit mindestens einem Beaufschlagungselement (8), so dass durch das Beaufschlagungselement (8) eine Eigenschaft der Kunststoff-Folie (1) verändert wird;
b) Messung einer Eigenschaft der Kunststoff-Folie (1) über die Breite (B) der Kunststoff-Folie (1) mittels der Messeinrichtung (5);
c) Auswertung des Verlaufs der gemäß Schritt b) gemessenen Eigenschaft der Kunststoff-Folie (1) über der Breite der Kunststoff-Folie (1) und Zuordnung der Positionen (I, II, III, ...) der Düsenbolzen (3) am Ort der Messeinrichtung (5) aufgrund der aufgegebenen Beaufschlagung;
d) Speichern der ermittelten zugeordneten Positionen (I, II, III, ...) für den laufenden und/oder den sich anschließenden Fertigungsprozess,
**dadurch gekennzeichnet, dass**
die Beaufschlagung mit dem Beaufschlagungselement (8) gemäß Schritt a) an einer oder an mehreren solcher Stellen über der Breite (B) der Kunststoff-Folie, vorzugsweise nur an diesen Stellen, durchgeführt wird, an der nach der Fertigung der Kunststoff-Folie (1) ein Schnitt, insbesondere ein Randbeschnitt, ein Mittelschnitt oder ein Teilnutzenschnitt, durchgeführt wird.

2. Verfahren nach Anspruch 1, **dadurch gekennzeichnet, dass** die Beaufschlagung mit dem Beaufschlagungselement (8) gemäß Schritt a) von Anspruch 1 in unmittelbarer Nähe des Düsenbolzens (3) erfolgt.

3. Verfahren nach Anspruch 1 oder 2, **dadurch gekennzeichnet, dass** die Beaufschlagung mit dem Beaufschlagungselement (8) gemäß Schritt a) von Anspruch 1 in einem Abstand (a) zwischen 5 mm und 100 mm, vorzugsweise zwischen 10 mm und 30 mm, erfolgt.

4. Verfahren nach einem der Ansprüche 1 bis 3, **dadurch gekennzeichnet, dass** die Beaufschlagung mit dem Beaufschlagungselement (8) gemäß Schritt a) von Anspruch 1 in Flucht mit der Position des Düsenbolzens (3) erfolgt.

5. Verfahren nach einem der Ansprüche 1 bis 4, **dadurch gekennzeichnet, dass** die Beaufschlagung mit dem Beaufschlagungselement (8) gemäß Schritt a) von Anspruch 1 so erfolgt, dass ein Luftstrom mittels des Beaufschlagungselements (8) auf die Oberfläche der Kunststoff-Folie ausgebracht wird.

6. Verfahren nach einem der Ansprüche 1 bis 4, **dadurch gekennzeichnet, dass** die Beaufschlagung mit dem Beaufschlagungselement (8) gemäß Schritt a) von Anspruch 1 so erfolgt, dass ein Vakuum mittels des Beaufschlagungselements (8) an der Oberfläche der Kunststoff-Folie erzeugt wird.

7. Verfahren nach einem der Ansprüche 1 bis 4, **dadurch gekennzeichnet, dass** die Beaufschlagung mit dem Beaufschlagungselement (8) gemäß Schritt a) von Anspruch 1 so erfolgt, dass eine Flüssigkeit, insbesondere Wasser oder Öl, mittels des Beaufschlagungselements (8) auf die Oberfläche der Kunststoff-Folie aufgespritzt wird.

8. Verfahren nach einem der Ansprüche 1 bis 4, **dadurch gekennzeichnet, dass** die Beaufschlagung mit dem Beaufschlagungselement (8) gemäß Schritt a) von Anspruch 1 so erfolgt, dass eine Farbe mittels des Beaufschlagungselements (8) auf die Oberfläche der Kunststoff-Folie aufgebracht wird.

9. Verfahren nach einem der Ansprüche 1 bis 8, **dadurch gekennzeichnet, dass** die Abfolge der Schritte a) bis d) gemäß Anspruch 1 automatisiert durchgeführt wird.

10. Verfahren nach einem der Ansprüche 1 bis 9, **dadurch gekennzeichnet, dass** die Messeinrichtung (5) die Eigenschaft der Kunststoff-Folie (1) mittels einer Infrarotmessung, einer Röntgenmessung, einer Ultraschallmessung, einer optischen Messung oder einer Radioaktivitätsmessung ermittelt.

11. Verfahren nach einem der Ansprüche 1 bis 10, **dadurch gekennzeichnet, dass** die Auswertung des Verlaufs der Eigenschaft der Kunststoff-Folie (1) über der Breite (B) der Kunststoff-Folie (1) gemäß Schritt c) von Anspruch 1 zur Identifikation der zugeordneten Position (I, II, III, ...) der Düsenbolzen (3) eine Ermittlung der Maximal- oder Minimalwerte der Dicke (D) der Kunststoff-Folie (1) über deren Breite umfasst.

12. Verfahren nach einem der Ansprüche 1 bis 10, **dadurch gekennzeichnet, dass** die Auswertung des Verlaufs der Eigenschaft der Kunststoff-Folie (1) über der Breite (B) der Kunststoff-Folie (1) gemäß Schritt c) von Anspruch 1 zur Identifikation der zugeordneten Position (I, II, III, ...) der Düsenbolzen (3) eine Ermittlung der Maximal- oder Minimalwerte der Dichte der Kunststoff-Folie (1) über deren Breite umfasst.

13. Verfahren nach einem der Ansprüche 1 bis 10, **dadurch gekennzeichnet, dass** die Auswertung des Verlaufs der Eigenschaft der Kunststoff-Folie (1) über der Breite (B) der Kunststoff-Folie (1) gemäß Schritt c) von Anspruch 1 zur Identifikation der zugeordneten Position (I, II, III, ...) der Düsenbolzen (3) eine Ermittlung einer optischen Eigenschaft der Kunststoff-Folie (1), insbesondere des Reflexionsverhaltens der Kunststoff-Folie (1), über deren Breite umfasst.
